Europäisches Patentamt

European Patent Office

Office européen des brevets

(11) Publication number: **0 177 058**
**A2**

## (12) EUROPEAN PATENT APPLICATION

(21) Application number: **85112606.0**

(22) Date of filing: **04.10.85**

(51) Int. Cl.⁴: **G 06 F 15/36**

(30) Priority: **04.10.84 JP 207243/84**

(43) Date of publication of application:
**09.04.86 Bulletin 86/15**

(84) Designated Contracting States:
**DE FR GB IT**

(71) Applicant: **International Business Machines Corporation
Old Orchard Road
Armonk, N.Y. 10504(US)**

(72) Inventor: **Tozawa, Yoshio
1485-5 Nakanoshima Tama-ku
Kawasaki-shi Kanagawa-ken(JP)**

(74) Representative: **Teufel, Fritz, Dipl.-Phys. et al,
IBM Deutschland GmbH. Europäische Patentdienste
Postfach 265
D-8000 München 22(DE)**

(54) A method and a device for calculating a histogram.

(57) Histograms of large volume data, e.g. image data, are calculated in at least two phases under the control of a computer (1), using a first histogram storage (29) with a wast address space and short word length and a second histogram storage (25) with a limited address space but a long word length. In one or several first phases, a preliminary histogram is generated in the first histogram storage; simultaneously, possible overflow items are identified using the second histogram storage. In a final phase, the overflow items are processed in the second histogram storage to update the preliminary histogram in the first histogram storage.

./...

FIG. 3

## A METHOD AND A DEVICE FOR CALCULATING A HISTOGRAM

This invention relates to a method for calculating a
histogram, in accordance with the preamble of claim 1
and a device for calculating such histograms.

A histogram is a basic statistical information for image
processing such as the quantization of an image, classification, and pattern recognition.  To understand this,
take the quantization of a color image for an example.
Quantization means classification of sample values and
mapping of the sample values in the same group of single
values.  When a color image is scanned for the three
dimensions of red, green and blue with eight bits, the
number of the sample values is $2^{8 \times 3}$ (= 16,777,216), and if the image data thus obtained is to be displayed with
a display having 256 colors and a corresponding lookup
table with an entry number of 256, $2^{8 \times 3}$ sample
values must be assigned to 256 variable display colors.
In this case, unless the quantization of colors, or the
selection of display colors and mapping between the
display colors and the sample values is adequately
executed, so-called false contours will be actualized.
In general, therefore, fine classification is made for
the sample value range where the frequency is high, and
on the other hand, coarse classification is made for the
sample value range where the frequency is low (tapered
quantization).  For such quantization, a histogram is
used as the reference.

Many types of workstations for image processing presently available in the market have a function for
histogram calculation, or a histogrammer.  This meets
with the demand for intelligent workstations.  However,
histogrammers presently used cannot cope with actual
image processing satisfactorily.

That is, the dimensions of color image to be processed
are normally 3, and each dimension is usually displayed with 8 bits.  The image data obtained by scanning a photograph with a digitizer is typically of 3 dimensions (red, green and blue) with 8 bits given to each dimension.  Sensors for remote sensing have normally 5-8 dimensions.  When a sensor for pattern recognition will be developed, images with more than 3 dimensions will have to be processed.

If such image data are processed at once to calculate a histogram, the number of word locations will be enormous, and the histogrammer must be provided with a long word storage.  For a 3-dimension, 8-bit image, for example, the number of varieties of colors is $2^{3 \times 8} = 256^3$

(=16,777,216), and a storage with $256^3$ word locations

must be provided.  For 4-dimension, 6-bit pictures, also

$2^{4 \times 6} = 256^3$ word locations are required.  Furthermore, each word location must have sufficient word length not to overflow.  Since overflow makes the apparent characteristics of the histogram completely different from actual one.  For example, although an image having a number of red picture elements near the overflow value must resemble to an image having a number of red picture elements a little exceeding the overflow value, the histogram indicates both images having completely different characteristics. Since the maximum value of frequencies cumulated in any word location is arranged to be the same as the number of picture elements of the image (as is obvious when single-color pictures are considered), a word length exceeding 20 is required for an image consisting of 1,024 x 1,024 picture elements, a word length exceeding 22 is required for an image consisting of 2,048 x 2,048 picture elements, and a word length exceeding 24 is required for an image consisting of 4,096 x 4,096 picture elements. It is unrealistic from the viewpoint of costs to have a storage for the histogrammer to satisfy the requirements of the number of word locations and word length.

Of course, conventional workstations for image processing have no such high-cost memories. It was therefore impossible to produce a histogram in a single pass from an image with an enormous number of colors, such as a 3-dimension, 8-bit image. In prior system, to obtain the histogram of such an image the enormous number of colors are divided into a plurality of segments, then histogram calculations are executed for each segment, and the resultant sub-histograms are integrated. In this case, it is obvious that the number of colors in a segment is equal to or smaller than the number of word locations in the histogrammer. For example, an IBM System 7350 Display has 4,096 32-bit registers for the histogrammer. For processing a 3-dimension, 8-bit image, 4,096 (= $256^3$ ./. 4,096) histogram calculations are required. Such repetition of calculations is very inefficient.

It is the object of this invention to provide a method and a device for calculating a histogram in one or few phases without using a memory having an enormous number of word locations with long word length. This object is achieved by the invention as described in claim 1 and 4 resp.; embodiments are characterized in the dependent claims.

The invention proposes a storage for histogram with an enormous number of word locations having short word length. Using this storage, the histogram of an image is obtained in one or several phases of processing. Since this storage for histogram has a short word length, the number of word locations can be made larger than that in conventional storages, and the repetition of histogram calculations can be reduced.

In addition, an auxiliary storage with a word length long enough to prevent overflow, and a relatively small number of word locations is also provided. The items for which the histogram is calculated are divided into a plurality of groups, and each of the resulting item groups is connected to each of the word locations of the auxiliary storage. Upon occurrence of one of the items the content of the auxiliary storage is incremented at the corresponding location. Then it is determined whether the content of each word location of the auxiliary storage exceeds the overflow value; finally, and based on the resultant determination, the items having a possibility of overflow are extracted. Then, histogram calculation for items extracted is performed using the auxiliary storage, and the values of histograms previously obtained with the storage for histogram are corrected by the results of histogram calculation.

An embodiment of the invention will now be described more particularly, and illustrated by the accompanying drawings, in which

- 6 -

Figure 1 is a block diagram schematically showing an embodiment of this invention;

Figure 2 is a flow chart showing the operation of the embodiment of Figure 1;

Figure 3 is a block diagram showing an example of the configuration of the histogram unit 5 for the embodiment of Figure 1;

Figure 4 is a flow chart for illustrating the operation of the configuration of Figure 3;

Figure 5 is a block diagram showing the details of the long word length histogrammer 25 of Figure 4;

Figure 6 is a block diagram showing an example of the short word length histogrammer 29 of Figure 5;

Figure 7 is a diagram for illustrating histogram calculation using the short word length histogrammer 29;

Figures 8 and 9 are diagrams for illustrating the decision of projections of candidates for overflown sample values with the long word length histogrammer 25;

Figures 10, 11, 12, 13 and 14 are diagrams illustrating the mapping of the storage location of sample values in the long word length histogrammer 25.

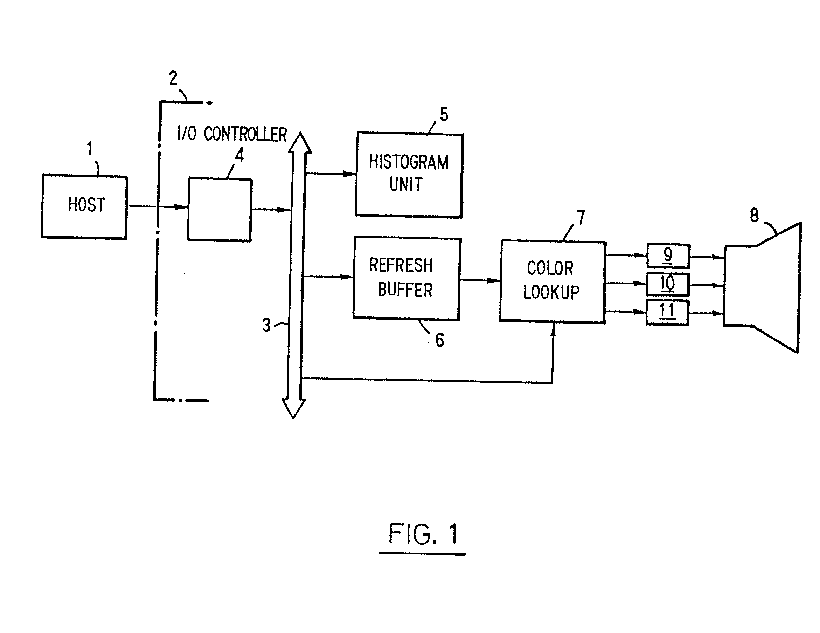

Figure 1 shows schematically an embodiment of a display system for executing image display after color quantization, for example, an IBM 7350 Image Processing System to which this invention is applied. In Figure 1, the host 1 is connected to the system bus 3 of the image processing system 2 through the I/O controller 4. Also connected to the system bus 3 are the histogram unit 5, the refresh buffer 6, the color lookup table 7, and other system resources not shown. In order to display an image with this system 2, the display data are stored in the refresh buffer 6, and the refresh buffer 6 is accessed in synchronism with the vertical and horizontal scanning of the CRT 8. The outputs of the refresh buffer 6 are converted with the color lookup table 7, then, supplied to, for example, D/A converters 9, 10 and 11 corresponding to primary color signals of red, green and blue, respectively, and the CRT 8 is driven by the outputs of these D/A converters 9, 10 and 11.

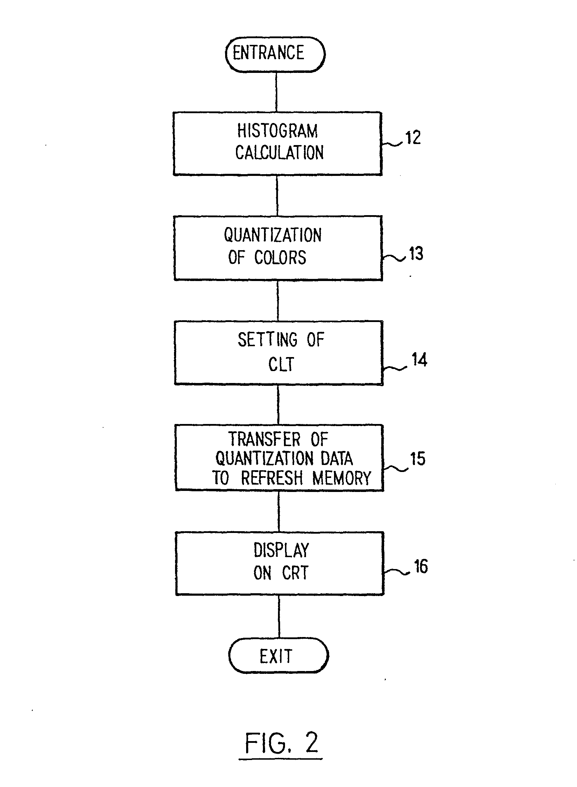

Figure 2 shows the operation of picture processing by quantizing with the system shown in Figure 1. As is shown in Figure 2, histogram calculation is first executed (Step 12). The input image data obtained from the digitizer (not shown) are supplied to the histogram-unit 5 from the host 1, and a histogram is produced. The detail of the histogram unit 5 will be described later. The histogram is then transferred to the host 1, and the host 1 executes the predetermined quantization algorithm referring to this histogram and produces the mapping table for the quantization of colors (Step 13). In this step, the host 1 divides the assumed color space into a number of small color spaces equal to the number of colors which can be displayed on the CRT 8 at the same time, and selects the optimum color to represent each of these small color spaces. The sample value, or original colors in each small color space is mapped to the corresponding color selected. For display of 3-dimension, 6-bit or 8-bit image on the CRT 8 having 4,096 variable display colors, 262,144 $(=2^{6\times3})$ or 16,777,216 $(= 2^{8\times3})$ colors are mapped to 4,096 colors.

Colors selected by such quantization algorithm are set to entries 0 - 4,095 of the color lookup table CLT 7 (Step 14). On the other hand, image data are converted to color numbers 0 - 4,095 (corresponding to entries 0 - 4,095) according to the mapping table described above, transferred to the refresh buffer 6, and stored (Step 15). Then, the data are displayed on the CRT 8 according to the data stored in the refresh buffer 6
(Step 16).

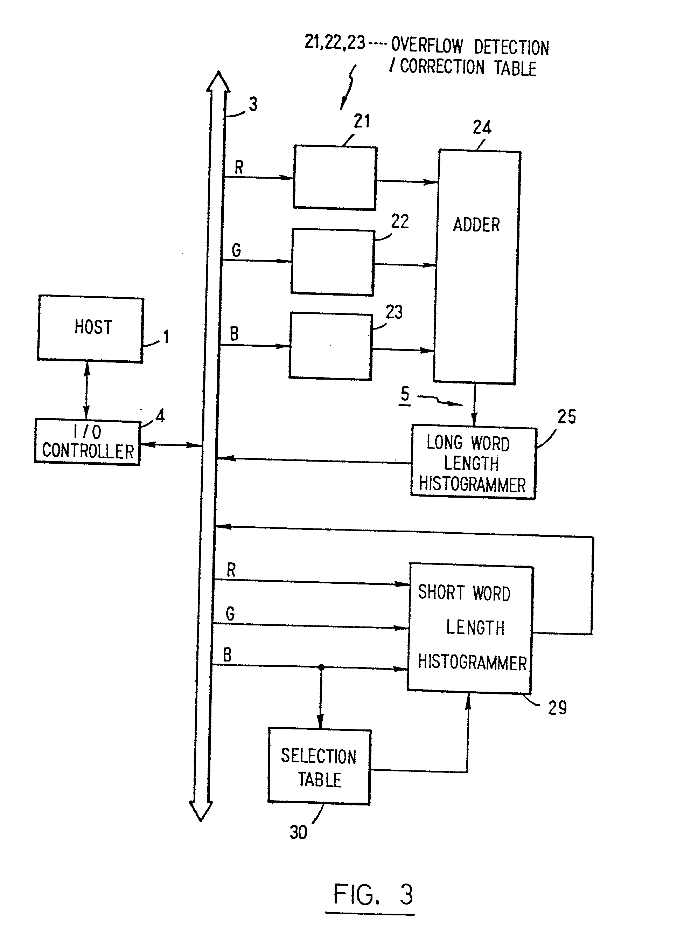

Figure 3 shows the configuration of the histogram unit
5.  It is shown to process image data with three
dimensions of red, green and blue.  Of course it can be
arranged for image data of more than three dimensions.

In Figure 3, overflow detection and correction tables
21, 22 and 23 corresponding to each of red, green and
blue band, respectively, are connected to the system bus
3.  Each output of the tables 21, 22 and 23 is supplied
to the adder 24, where addition is executed.  The output
of the adder 24 is supplied to the long word length
histogrammer 25, and the output of this long word length
histogrammer is supplied to the host 1 through the
system bus 3 and the I/O controller 4.  The long word
length histogrammer 25 has a relatively small number of
long word length registers.  When this invention is
applied to an IBM 7350 Image Processing System, the
histogrammer consisting of 4,096 32-bit registers is
used as the long word length histogrammer 25.  An image
having 1,024 x 1,024 picture elements can be processed
with 20-bit words, and images having 2,048 x 2,048 and 4,096 x 4,096 picture elements can be processed with
22-bit and 24-bit words, respectively.  From this is
obvious that the long word length histogrammer 25 is
sufficient for the histogram calculation of normal
pictures.

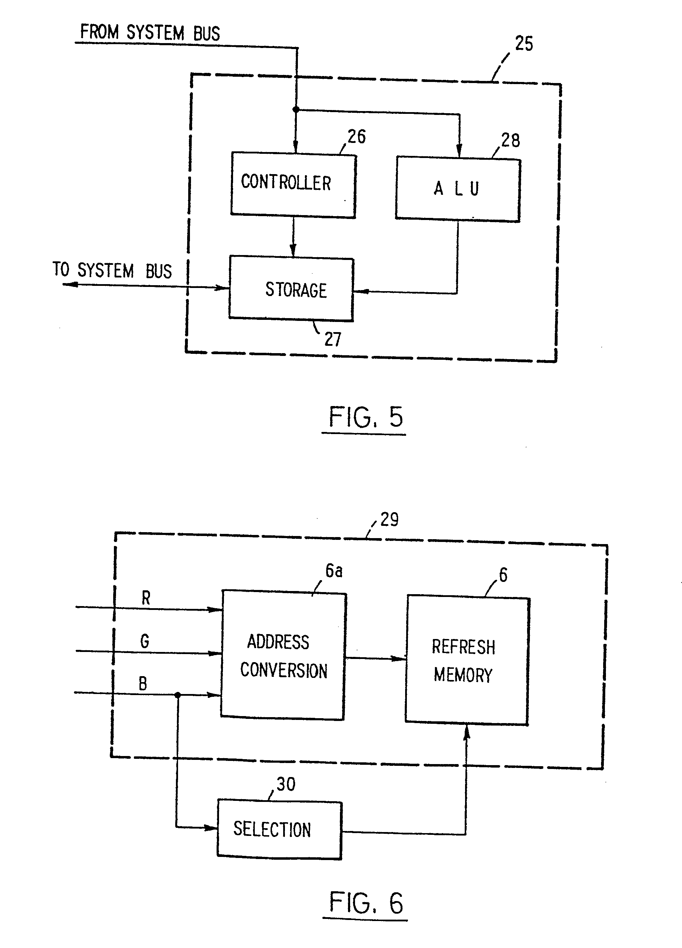

As is shown in Figure 5, the long word length histogrammer 25 consists of the controller 26, the storage 27
and the ALU 28.  When data is transferred to the
histogrammer 25, the content of corresponding location
in the storage 27 is accessed, 1 is added to the content
at the ALU 28, and the content is returned to the
original location.

In Figure 3, the short word length histogrammer 29 and
the selection table 30 are also connected to the system
bus 3.  The short word length histogrammer 29 is used to
produce a histogram over all the sample values
tentatively.  It has a storage with a relatively large
number of short word length word locations.  The word
length of this storage is, for example, 10 bits, and it
is anticipated that overflow occurs at some locations
during usual histogram calculation.

As is seen later, there is required in this embodiment at least one more data transfer (phase) from the host 1 to the system 2 (Figure 1) than the number of image dimensions indicates. In order to use the resources efficiently, it is preferable to divide the production of histogram for all the sample values into this number. By this, all the sample values can be covered by $2^{6\times3}/(3+1)$ = 65,536 location for a 3-dimension, 6-bit image, and by $2^{8\times3}/(3+1)$ = 4,194,304 locations for a 3-dimension, 8-bit image.

In this connection the refresh buffer 6 (Figure 1) can be used as the histogrammer 29. In an IBM 7350 Image Processing System, for example, since the refresh buffer 6 has 1,048,576 (= $2^{20}$) locations, a 1/16 region of the refresh buffer 6 can be used for the transfer of a 3-dimension, 6-bit image in 4 times of image data transfer. For the 3-dimension, 8-bit image, however, image data transfer is required 16 times in total, even if the total capacity of 1,048,576 locations is used in the refresh buffer. For accessing the locations of the refresh buffer 6 by image element data, the address converter 6a shown in Figure 6 is required. In an IBM 7350 Image Processing System, the X-Y random access processor can be used. It should be noted that the number of locations in a conventional histogrammer was 4,096, and that 4,096 repetitions or phases were required to process a 3-dimension, 8-bit image.

The selection table 30 will be described later.

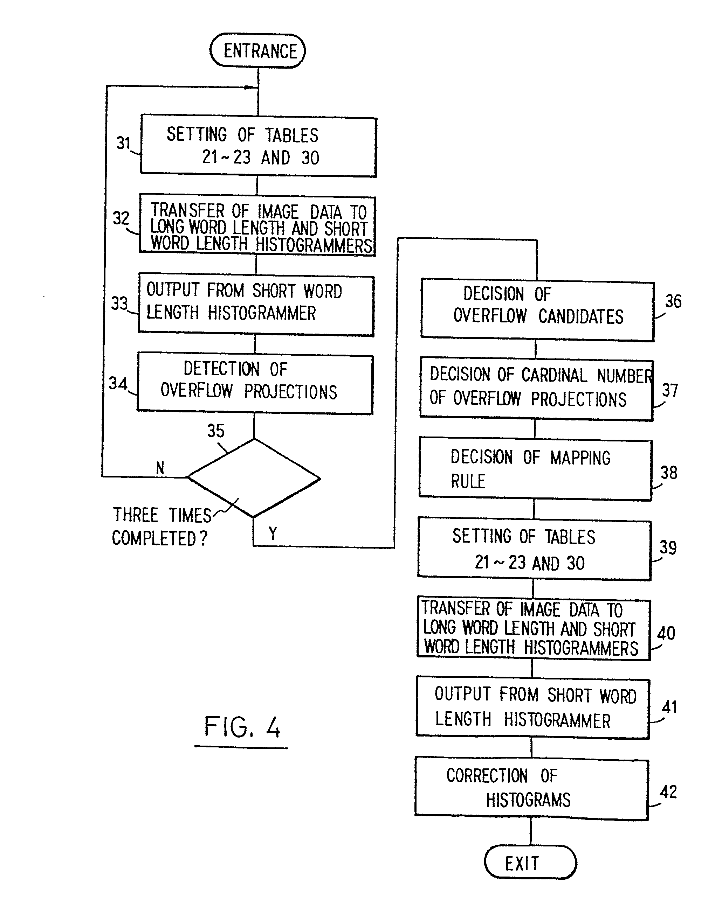

Next, referring to Figure 4, the operation of the embodiment of Figure 3 will be described. For the aid of understanding, refer to the Table below. This table shows how the long word length histogrammer 25 and the short word length histogrammer 29 process image data each time they are transferred from the host 1. These transfers will be called first, second, third and fourth phase of image data transfer depending on the time of transfer.

Table

|  | Short word length histogrammer | Long word length histogrammer |
|---|---|---|
| First phase | Histogram calculation of the first region | Decision of the projection of overflow candidate on R axis |
| Second phase | Histogram calculation of the second region | Decision of the projection of overflow candidate on G axis |

| Third phase | Histogram calculation of the third region | Decision of the projection of overflow candidate on B axis |
|---|---|---|
| Fourth phase | Histogram calculation of the fourth region | Histogram calculation of overflow candidate |

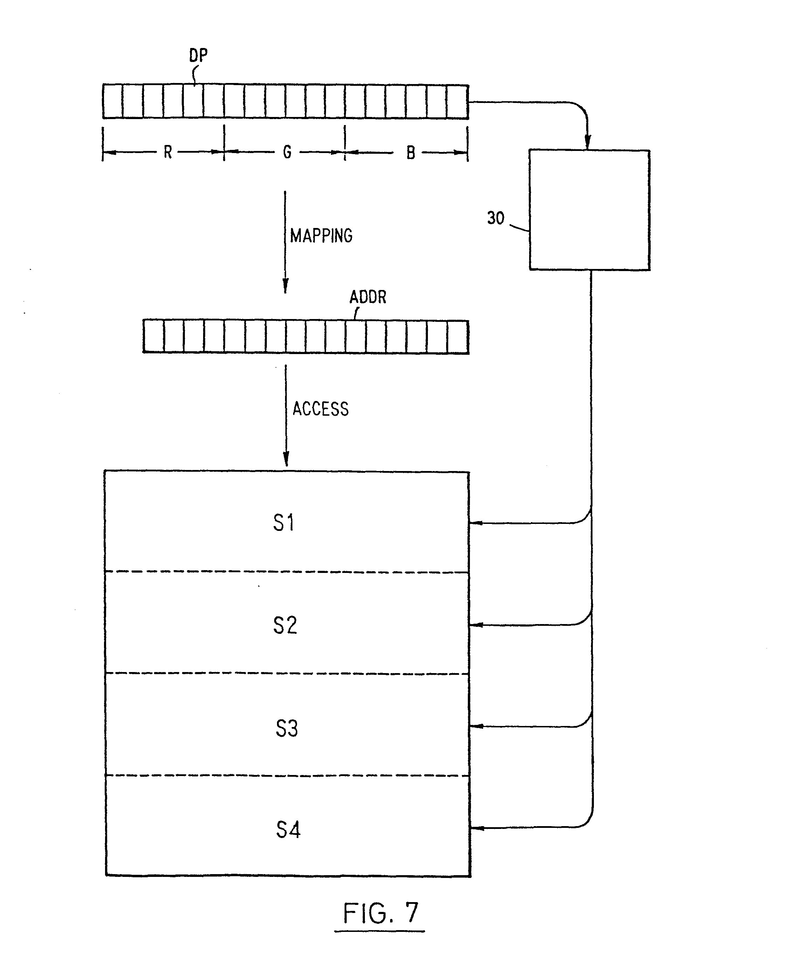

In the first phase of image data transfer, the selection table 30 and overflow detection/correction Table 21 - 23 are set (Step 31). In this case, the selection Table 30 masks the regions other than the first region (S1 in Figure 7) occupying 1/4 of the entire space of sample values, and invalidates picture elements corresponding to second, third and fourth regions (S2, S3, and S4 in Figure 7) transferred to the short word length histogrammer 29. On the other hand, when picture element data corresponding to the first region, S1, is transferred to the short word length histogrammer 29, 1 is added to the content of corresponding locations of the storage, and the histogram calculation is performed (Step 32). In the configuration shown in Figure 7, 3-dimension, 18-bit picture element data, DP, of red, green and blue (in a $2^{3 \times 6}$ system) are transferred to the short word length histogrammer 29. From these picture element data, DP, the upper 2 bits are removed and the remaining 16 bits are transferred to the short word length histogrammer as the

- 14 -

address, ADDR. On the other hand, the upper 2 bits are supplied to the selection Table 30. As described above, the selection Table 30 is set in Step 31, and if the upper 2 bits are the specified values, e.g. "00", an enable signal is sent to the short word length histogrammer 29, otherwise a disable signal is sent. As the result, histogramming is executed only for the region S1 corresponding to "00" of the upper 2 bits of the sample value space. This histogram is supplied to the host 1 (Step 33).

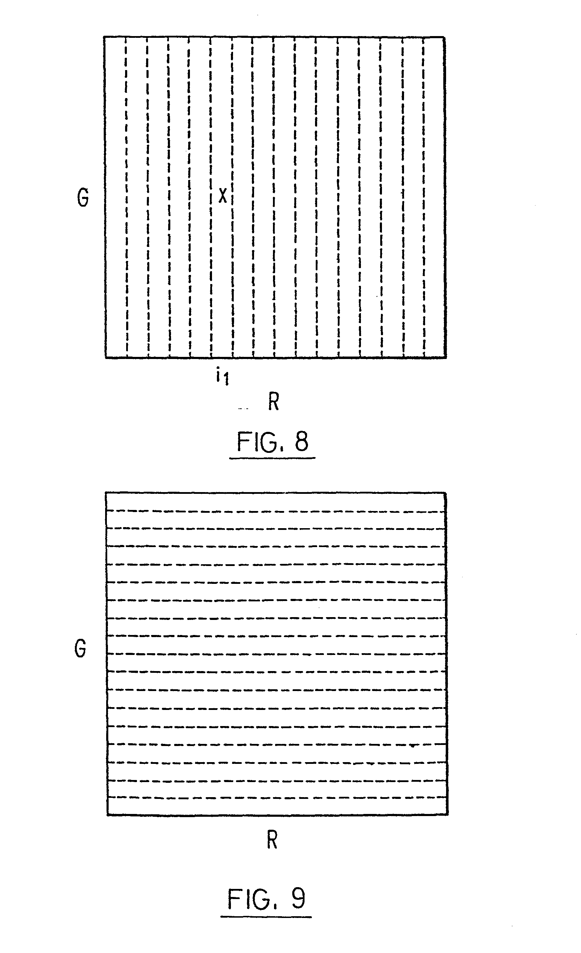

On the other hand, overflow detection/correction tables 21 - 23 operate together with the adder 24, and divide the sample value space according to the red display bits R of the sample values to make the sample value in the same division a single value. This step is schematically shown in Figure 8. In Figure 8, although the sample value space is shown to be of 2 dimensions of red and green, this is only for the simplification of description. Although the number of division is shown as 16, the number of red indications is 64 (= $2^6$) in the actual $2^{3 \times 6}$ situation. For such division, the red display bits in the picture element data are supplied to the adder 24 through the Table 21, whereas the output of

- 15 -

Tables 22 and 23 are set to "0" regardless of the values
of green and blue display bits. When the picture element
data are converted by Tables 21, 22 and 23, and the adder
24, and are supplied to the long word length histogrammer
25, the frequencies of sample values are cumulated for
each division shown in Figure 8 (Step 32). This is as if
the frequencies of sample values are projected on the red
axis. If the sample value indicated by X in Figure 8 is
assumed to overflow out of the short word length histogrammer 29, the accumulated value of the projections i,
on the corresponding red axis becomes equal to or
greater than the overflow value. When the accumulated
value of projections on the red axis is equal to or
greater than the overflow value, it is reasonable to make
these projections the candidates of overflown sample
values (Step 34).

In the first phase of image data transfer, as described
above, the histogram of the first region S1 is calculated
with the short word length histogrammer 29, and the
projection of the candidates of overflow sample values on
the red axis is obtained using the long word length
histogrammer 25. Similar sequences are repeated twice.
In second and third phases of picture element data

- 16 -

transfers, the selection Table 30 is set to send an enable signal to the short word length histogrammer 29 when the upper two bits are, for example, "01" and "10", respectively, and as the result, histograms of second and third regions, S2 and S3, in Figure 7 are calculated. In the second phase of picture element data transfer, the overflow detection/correction Tables 21, 22 and 23, and the adder 24 divide the picture as shown in Figure 9, and the projection of the candidates of overflown sample values on the green axis is produced. For this phase, no description will be required. It is the matter of course that in the third phase of picture element data transfer, the projection of the candidates of overflown sample values on the blue axis is produced by the long word length histogrammer 25.

Next, the operation of the fourth phase of picture element data transfer will be described.

First, the candidates of overflown sample values are extracted based on the projections of the candidates of overflown sample values on red, green and blue axes (Step 36). If the projections of the candidates of overflown sample values on red, green and blue axes are represented

by $i_1$, $i_2$, and $i_3$, respectively, $(i_1, i_2, i_3)$ is the candidate of overflown sample values.

Then the normal histogram for the candidate of overflown sample values $(i_1, i_2, i_3)$ is produced using the long word length histogrammer 25. For this purpose, the cardinal numbers $C_1$, $C_2$, and $C_3$ for the projections $i_1$, $i_2$, and $i_3$ of the candidates of overflown sample values on red, green and blue axes, respectively, are determined (Step 37), and the mapping rule between the candidates of overflown sample values $(i_1, i_2, i_3)$ and the storage locations of the long word length histogrammer 25 is decided in accordance with these cardinal numbers $C_1$, $C_2$, and $C_3$ (Step 38). Then, the overflow detection/correction Tables 21, 22 and 23 are set according to this mapping rule (Step 39). Next, the image data are transferred from the host 1 to the system 2, and the histogram for the candidates of overflown sample values $(i_1, i_2, i_3)$ is calculated with the long word length histogrammer 25 (Step 40).

Preferably, the candidates of overflown sample values $(i_1, i_2, i_3)$ are mapped in the location $\ell$ of the long word length histogrammer 25 according to the mapping rule of:

$$\ell(i_1, i_2, i_3) = n_1(i_1) \times 1 + n_2(i_2) \times 1 \times (C_1+1)$$
$$+ n_3(i_3) \times 1 \times (C_1+1) \times (C_2+1)$$

where $n_1(i_1)$ is the ordinal number of the corresponding projection on the red axis, $i_1$, and $n_2(i_2)$ and $n_3(i_3)$ are the ordinal numbers of the projections on the green and blue axes $i_2$ and $i_3$, respectively.

The Tables 21, 22 and 23 which realize such a mapping rule are as follows: First, the Table 21 outputs zero whenever a value other than $i_1$ is input, and outputs $n_1(i_1) \times 1$ when $i_1$ is input. The Table 22 outputs zero whenever a value other than $i_2$ is input, and outputs $n_2(i_2) \times 1 \times (C_1+1)$ when $i_2$ is input. The Table 23 outputs zero whenever a value other than $i_3$ is input.

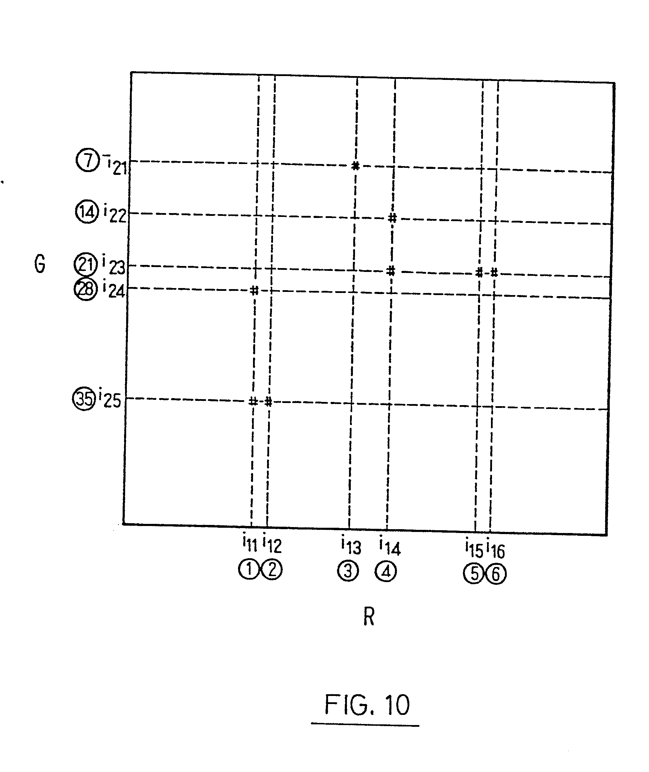

For the aid of understanding the above steps 36 - 40, consider the case where overflows indicated by # in Figure 10 occur as an example. In Figure 10, the projections $i_1$ and $i_2$ of overflown sample values are separately shown as $i_{11}$, $i_{12}$ ... and $i_{21}$, $i_{22}$ ... The projection $i_3$ is not shown. It is obvious that the candidates ($i_1$, $i_2$, $i_3$) of overflown sample values are indicated by the intersections of broken lines.

As is seen in Figure 2, cardinal numbers $C_1$ and $C_2$ are 6 and 5, respectively. Then, the mapping rule $\ell(i_1, i_2, i_3)$ is:

$$\ell(i_1,i_2,i_3) = n_1 \times 1 + n_2 \times 1 \times 7 + n_3 \times 1 \times 7 \times 6$$

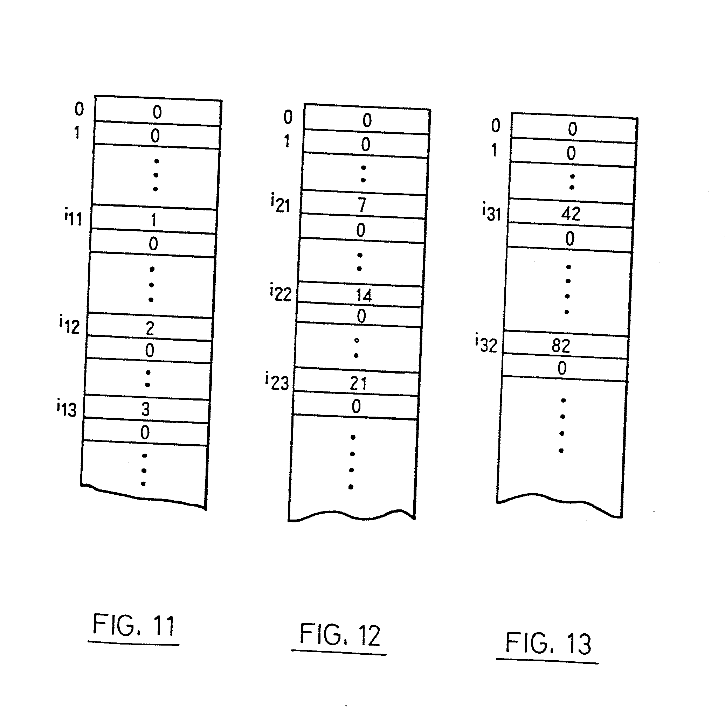

Tables 21, 22 and 23 are set according to this rule as shown in Figures 11, 12 and 13, respectively.

After setting such tables, when the candidate of an overflown sample value ($i_{11}$, $i_{21}$, $i_{31}$) is transferred, Tables 21, 22 and 23 output "1", "7" and "42", respectively, and the content of the location of "50" in the long word length histogrammer 25 is increased.

Since other candidates of overflown sample values
$(i_1, i_2, i_3)$ are similar, no further description will
be required.

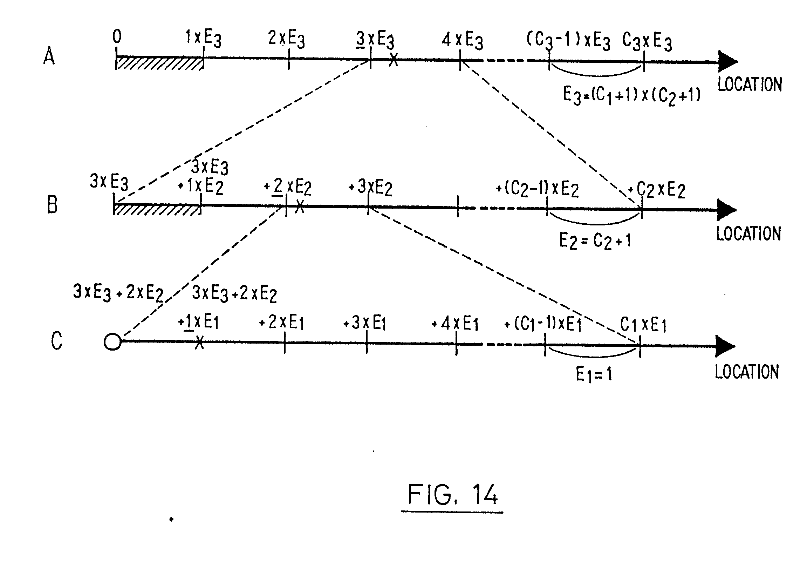

Figure 14 shows the storage locations of candidates
of overflown sample values in the long word length
histogrammer 25. In Figure 14, the candidate $(i_{13},$
$i_{22}, i_{31})$ is mapped at locations indicated by X. The
important numbers for the mapping of the candidate
$(i_{13}, i_{22}, i_{31})$ are underscored. When a sample value
other than the candidates of overflown sample values
are transferred, at least one of Tables 21, 22 and 23
becomes zero. The hatched region in Figure 14A is
the location corresponding to the case where the blue
display bit in the picture element data is not $i_3$.
The hatched region in Figure 14B is the location corresponding to the case where the green display bit in
the picture element data is not $i_2$. The point indi-
cated by o is the location corresponding to the case
where the red display bit is not $i_1$. It is obvious
that other regions directly correspond to overflown
sample values $(i_1, i_2, i_3)$.

In Step 39, the selection Table 30 is also set, then
in Step 40, the histogram of the region S4 in Figure
7 is calculated by the short word length histogrammer
29.  This histogram is transferred to the host 1 (Step
41), and the complete histogram for a picture is obtained even tentatively.  Then, the histogram of the
candidate of overflown sample values $(i_1, i_2, i_3)$
obtained using the long word length histogrammer 25
is transferred to the host 1, and the above completed
histogram is corrected (Step 42).  Histogram calculation is thus completed.

Although the above description is limited to the
processing of 3-dimension pictures of red, green and
blue, it will be obvious that this embodiment can be
applied to n-dimension pictures.  In such cases n
Tables 21, 22 and 23 must be prepared.  It is also
possible to use a table means divided into n regions.
In fact, the input lookup table is divided into a
plurality of segments in an IBM 7350 Image Processing
System.  The selection table can also be realized by
using this input lookup table.

When this invention is applied to an n-dimension picture, the projection of each dimension can be set as follows:

First dimension (first axis):

$$1xE_1, \ 2xE_1, \ ... \ C_1xE_1 \text{ where } E_1 \geq 1$$

Second dimension (second axis):

$$1xE_2, \ 2xE_2, \ ... \ C_2xE_2 \text{ where } E_2 \geq E_1x(C_1+1)$$

n-th dimension (n-th axis):

$$1xE_n, \ 2xE_n, \ ... \ C_nxE_n \text{ where } E_n \geq E_{(n-1)}x(C_{n-1}+1)$$

In the above example, the weight factor $E_1 = 1$; $C_i$ are the cardinal numbers for the resp. axes.

The mapping rule for the n-dimensional case is then:

$$\ell(i_1, \ i_2...i_n) = n_1(i_1) \ x \ E_1 + n_2(i_2) \ x \ E_2 + n_n(i_n) \ x \ E_n$$

C L A I M S

1.  A method for calculating a histogram, wherein the items to be histogrammed are mapped to the locations of a histogram storage for incrementing a count value in the selected location on occurrence of the corresponding item, characterized by the steps of:

    -   creating, in at least one first phase, a first preliminary histogram by mapping all items to the locations of a first histogram storage (29), whose address range is equal or bigger than the number of different items, and whose word length is too short to accommodate the maximum item frequency;

    -   identifying, in the first phase, overflow items occurring with a frequency higher than the word length of the first histogram storage can accommodate;

    -   creating, in a second phase, a second preliminary histogram by mapping the overflow items, to

- 24 -

the locations of a second histogram storage (25)
with an address range smaller than the number
of different items and with a word length that
is sufficient to accommodate the maximum item
frequency;

-   merging the first and second preliminary
    histograms to create the final histogram.


2.  The method of claim 1,
    characterized in that each item represents n color
    values of a point in an image,
    that the first preliminary histogram is generated by
    applying, in sequence, a first phase to each of n
    equal subparts of the total color value range,
    that in each of the first phases the frequency
    distribution of color values in one of the color
    axes is determined, and
    that in the second phase the frequency distributions
    on the color axes are evaluated to generate the
    second preliminary histogram.


3.  The method of claim 2,
    characterized in that the mapping of items in the second histogram storage is performed according to
the formula:

$$\ell = (n_1 \times E_1) + (n_2 \times E_2) + \dots (n_n \times E_n)$$

with $\quad E_1 = \text{const}$

$\qquad E_i = E_{i-1} \times (C_{i-1} + 1)$

wherein:

$\quad \ell \quad = \quad$ storage address

$\quad E_1 \quad = \quad$ a selectable offset on 1st axis

$\quad n_i \quad = \quad$ ordinal number of the overflow
projection on the i-th axis

$\quad C_i \quad = \quad$ total number of overflow projections
on i-th axis

4. Device for calculating a histogram including a storage
containing count values for the items to be histogrammed and computing means (1), to carry out the
method of the claims 1 to 3,
characterized in that there are provided:

- a first histogrammer (29) including a first histogram storage, whose address range is equal or bigger than the number of different items and whose wordlength is insufficient to accommodate the maximum item frequency;

- a second histogrammer (25) including a second histogram storage whose address range is smaller than the number of different items, and whose wordlength is sufficient to accommodate the maximum item frequency;

- selection means (21-23) to select specified items for processing in the second histogrammer and

- computing means (1) connected to the first and second histogrammer and the selection means.

5. The device of claim 4, characterized in that the computing means conditions the selecting means (21-23) in a first processing phase to enter selected items for mapping and storage in the second histogrammer and that the computing means evaluates the results of the first processing phase to condition the selecting means for a second processing phase.

6. The device of claim 4 or 5, characterized in that the first histogram storage is the video refresh buffer (6) of a display system (8).

FIG. 1

FIG. 2

21,22,23 ---- OVERFLOW DETECTION / CORRECTION TABLE

FIG. 3

FIG. 4

ENTRANCE

31 — SETTING OF TABLES 21～23 AND 30

32 — TRANSFER OF IMAGE DATA TO LONG WORD LENGTH AND SHORT WORD LENGTH HISTOGRAMMERS

33 — OUTPUT FROM SHORT WORD LENGTH HISTOGRAMMER

34 — DETECTION OF OVERFLOW PROJECTIONS

35 — THREE TIMES COMPLETED ? N / Y

36 — DECISION OF OVERFLOW CANDIDATES

37 — DECISION OF CARDINAL NUMBER OF OVERFLOW PROJECTIONS

38 — DECISION OF MAPPING RULE

39 — SETTING OF TABLES 21～23 AND 30

40 — TRANSFER OF IMAGE DATA TO LONG WORD LENGTH AND SHORT WORD LENGTH HISTOGRAMMERS

41 — OUTPUT FROM SHORT WORD LENGTH HISTOGRAMMER

42 — CORRECTION OF HISTOGRAMS

EXIT

FROM SYSTEM BUS

25

26
CONTROLLER

28
A L U

TO SYSTEM BUS

STORAGE

27

FIG. 5

29

R

G

B

6a
ADDRESS CONVERSION

6
REFRESH MEMORY

30
SELECTION

FIG. 6

FIG. 7

FIG. 8

FIG. 9

FIG. 10

|     |     |
| --- | --- |
| 0   | 0   |
| 1   | 0   |
|     | ⋮   |
| $i_{11}$ | 1   |
|     | 0   |
|     | ⋮   |
| $i_{12}$ | 2   |
|     | 0   |
|     | ⋮   |
| $i_{13}$ | 3   |
|     | 0   |
|     | ⋮   |

FIG. 11

|     |     |
| --- | --- |
| 0   | 0   |
| 1   | 0   |
|     | ⋮   |
| $i_{21}$ | 7   |
|     | 0   |
|     | ⋮   |
| $i_{22}$ | 14  |
|     | 0   |
|     | ⋮   |
| $i_{23}$ | 21  |
|     | 0   |
|     | ⋮   |

FIG. 12

|     |     |
| --- | --- |
| 0   | 0   |
| 1   | 0   |
|     | ⋮   |
| $i_{31}$ | 42  |
|     | 0   |
|     | ⋮   |
| $i_{32}$ | 82  |
|     | 0   |
|     | ⋮   |

FIG. 13

FIG. 14